# EUROPÄISCHE PATENTSCHRIFT

(11) **EP 1 055 515 B1**
(45) Veröffentlichungstag und Bekanntmachung des Hinweises auf die Patenterteilung: **31.08.2005**
(21) Anmeldenummer: 00107065.5
(22) Anmeldetag: 04.04.2000
(51) Int. Cl.: B32B 27/36, B65D 85/10, B65D 71/00

(54) **Sammelpacksystem enthaltend eine siegelfähige Polyesterfolie**
Multi-unit pack system containing a sealable polyester film
Système d'emballage multiple contenant une feuille scellable en polyester

(30) Priorität: 26.05.1999 DE 19923839
(43) Veröffentlichungstag der Anmeldung: 29.11.2000
(73) Patentinhaber: Mitsubishi Polyester Film GmbH, 65203 Wiesbaden (DE)
(72) Erfinder: Peiffer, Herbert, 55126 Mainz (DE); Crass, Günther, 65232 Taunusstein-Wehen (DE); Murschall, Ursula, 55283 Nierstein (DE)
(74) Vertreter: Schweitzer, Klaus

(56) Entgegenhaltungen:
- EP-A- 0 945 258
- DE-A- 3 635 928
- US-A- 4 294 058
- US-A- 5 329 747

## Beschreibung

Die Erfindung betrifft ein Sammelpacksystem, bestehend aus einem Gebinde aus Einzelverpackungen, bei dem die Einzelverpackung in einer biaxial streckorientierten Polypropylenfolie mit modifizierten polyolefinischen Deckschichten erfolgt und die Gebindefolie aus einer siegelbaren Polyesterfolie mit Siegelschichten auf Basis von Polyestercopolymeren besteht.

Einzelverpackungen werden in der Regel zu Mehrfachgebinden zusammengefaßt. Ein bekanntes Beispiel hierfür ist die Stangenverpackung von Zigarettenpäckchen.

Die für den Zigarettenpäckcheneinschlag üblicherweise eingesetzte Folie weist vorwiegend polyolefinische Deckschichten (Siegelschichten) auf, die allerdings mit einer Gebindehülle aus einem ebenfalls siegelfähigen Kunststoff in nicht gewünschter Weise siegelt. Es wurden daher neben den polyolefinischen Deckschichten auch Siegelschichten aus PVDC oder aus (Poly)acrylaten für Kunststoffolien auf dem beschriebenen Anwendungsgebiet eingesetzt. Diese Kunststoffolien zeigten insgesamt eine bessere Anwendbarkeit für ein Sammelverpackungssystem, erreichten aber wegen ihres relativ hohen Preises keine Marktbedeutung.

In der DE-A-3 635 928 wird ein Sammelpacksystem beschrieben, bestehend aus einem Gebinde aus Einzelverpackungen, bei dem die Einzelverpackung in einer biaxial streckorientierten Polypropylenfolie mit modifizierten polyolefinischen Siegelschichten erfolgt. Die kennzeichnenden Merkmale des Sammelpacksystems bestehen darin, dass die Gebindefolie aus einer siegelbaren, biaxial streckorientierten, durch Co-extrusion hergestellten, symmetrisch aufgebauten mehrschichtigen Polypropylenfolie besteht, wobei die Deckschichten einen Zusatz eines niedrig molekularen Kohlenwasserstoffharzes enthalten und coronabehandelt sind. Die Folie für das Gebinde hat jedoch den technischen Nachteil, dass sie im Vergleich zu den PVDC-oder acrylatbeschichteten Folien eine relativ hohe Siegelanspringtemperatur aufweist. Bei Anwendung dieser Temperatur auf die Gebindefolie kommt es zu einer Schrumpfung der Gebindefolie und der Folie für die Einzelverpackung. Es entstehen Falten in beiden Folien, die sich nachteilig auf das optische Erscheinungsbild der Verpackung auswirken.

Bei der Stangenverpackung von Zigarettenpäckchen mußte man daher bei der Umhüllung aus Papier bleiben, nur der Zigarettenpäckcheneinschlag der Einzelpackung konnte in Folie ausgeführt werden.

Als Alternative zu den siegelfähigen Materialien in speziellen Siegelschichten wurden auch Versuche unternommen, die Basisschicht einer Kunststoffolie durch Inkorporation von bestimmten Kohlenwasserstoffharzen siegelfähig zu gestalten.

In der DE-C-2 045 115 wird eine heißsiegelfähige Monofolie ausgehend von einem stereoregulären Polypropylen durch Hinzufügen von 5 bis 40 Gew.-% wenigstens eines zu 50 % hydrierten vinylaromatischen Kohlenwasserstoffharzes, insbesondere eines Styrolharzes, mit einem Molekulargewicht über 500 und einem Tropferweichungspunkt zwischen 70 und 170 °C erreicht.

Polypropylenfilme, die neben den schon in der DE-C-2 045 115 enthaltenen Komponenten zusätzlich ein Polyethylen niedriger Dichte enthalten, werden in der EP-A-0 065 367 beschrieben. Durch diese spezielle Komposition soll die Extrudierbarkeit des Polypropylenfilms verbessert werden.

Die DE-A-2 362 049 stellt eine transparente, selbstversiegelnde Folie vor, die zu 90 bis 99,95 Gew.-% aus einem Mischpolymerisat aus Ethylen und Vinylester oder einem hydrocarbylsubstituierten Vinylester besteht und 0,05 bis 10 Gew.-% eines Kohlenwasserstoffharzes auch in Kombination mit 0,05 bis 5 Gew.-% Polyisobutylen oder Polybutylen enthält, um der Folie eine hohe Klebrigkeit und eine außerordentliche Elastizität zu verleihen.

Besonders die polyolefinischen Rohstoffe in der Siegelschicht der selbsttragende Polypropylenfolien, aber auch die selbstsiegelnden Polypropylenfolien zeigen hervorragende klebende Eigenschaften. Verpackungsfolien, die für das Sammelverpakkungssystem vorgesehen sind, sollen aber einerseits gegen sich selbst zwar ausreichend siegelbar sein, aber andererseits nicht gegen die Verpackungsfolien der in dem Gebinde enthaltenen Einzelverpackungen siegeln. Diese sehr wichtige Forderung wird von den bisher bekannten Folientypen nicht oder nur sehr kostenaufwendig geleistet.

Aufgabe der vorliegenden Erfindung war es daher, ein Sammelpacksystem für Gebindeverpackungen zu entwickeln, bei dem die Gebindefolie nicht mit der Folie der Einzelverpackung siegelt.

Gelöst wird diese Aufgabe durch ein Sammelpacksystem, bestehend aus einem Gebinde aus Einzelverpackungen, bei dem die Einzelverpackung in einer biaxial streckorientierten Polypropylenfolie mit modifizierten polyolefinischen Siegelschichten erfolgt. Das Sammelpacksystem ist dadurch gekennzeichnet, dass die Gebindefolie aus einer siegelbaren, biaxial streckorientierten, durch Coextrusion hergestellten, symmetrisch oder unsymmetrisch aufgebauten Polyesterfolie besteht, wobei die Siegelschicht(en) auf Basis von modifizierten Polyestercopolymeren aufgebaut ist (sind).

Erfindungsgemäß ist die Gebindefolie zumindest zweischichtig und umfaßt dann als Schichten eine Basisschicht B und die siegelfähige Deckschicht A. In einer bevorzugten Ausführungsform weist die Gebindefolie auf ihrer Basisschicht B beidseitig siegelfähige Deckschichten A und C auf.

Die **Basisschicht** B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 90 mol-%, besonders bevorzugt mindestens 95 mol-%, aus Ethylenglykol- und Terephthalsäure-Einheiten oder aus Ethylenglykol und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂- , -O-, -S- oder -SO₂- steht. Daneben sind auch Bisphenole der Formel HO-C₆H₄-C₆H₄-OH gut geeignet.

Andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure),

Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉) Alkandisäuren besonders geeignet, wobei der Alkanteil geradkettig oder verzweigt sein kann.

Die Herstelllung der Polyester kann z.B. nach dem Umesterungsverfahren erfolgen. Dabei geht man von Dicarbnsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die durch Coextrusion auf die Basisschicht B aufgebrachte(n) siegelfähige(n) Deckschicht(en) A (und C) sind auf Basis von Polyestercopolymeren aufgebaut.

Erfindungsgemäß können die Deckschichtcopolyester auf zwei unterschiedlichen Arten zusammengesetzt sein:
i) **Copolyester enthaltend Ethylen-2,6-naphthalat- und Ethylen-terephthalat-Einheiten**
   Die siegelfähige(n) Deckschicht(en) der erfindungsgemäßen Gebindefolie besteht(en) aus Copolymeren, die Ethylen-2,6-naphthalat-Einheiten und Ethylen-terephthalat-Einheiten enthalten. Bis zu 10 mol-% der Copolymere können aus weiteren Comonomeren (s.o.) bestehen. Das Gewichtsverhältnis der Ethylen-2,6-naphthalat-Einheiten zu den Ethylenterephthalat-Einheiten beträgt 5/95 bis 95/5, vorzugsweise 10/90 bis 90/10, ganz besonders bevorzugt 15/85 bis 85/15.
ii) **Copolyester enthaltend Ethylen-isophthalat- und Ethylen-terephthalat-Einheiten**
   Die siegelfähige(n) Deckschicht(en) der erfindungsmäßigen Gebindefolie sind Copolyester, die überwiegend aus Terephthalsäure-, Isophthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können (s.o.). Die bevorzugten Copolyester, die die gewünschten Siegeleigenschaften bereitstellen, sind solche, die aus Ethylenterephthalat- und Ethylenisophthalat-Einheiten und aus Ethylenglykol-Einheiten aufgebaut sind. Der bevorzugte Anteil an Ethylenterephthalat beträgt 40 bis 95 mol-% und der entsprechende Anteil an Ethylenisophthalat 60 bis 5 mol-%. Besonders bevorzugt sind Copolyester, bei denen der Anteil an Ethylenterephthalat 50 bis 90 mol-% und der entsprechende Anteil an Ethylenisophthalat 50 bis 10 mol-% beträgt.

Für die andere Schicht (Deckschicht C) oder für eventuell vorhandene Zwischenschichten können prinzipiell die gleichen Polymere verwendet werden, wie zuvor für die Basisschicht B und die Schicht A beschrieben wurde.

Die Basisschicht und die andere(n) Schicht(en) können zusätzlich üblich Additive, wie Stabilisatoren und/oder Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumfluorid, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder organische Partikel wie vernetzte Polystyrol- oder Acrylat-Partikel.

Als Antiblockmittel können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden. Als besonders geeignet haben sich Pigmentkonzentrationen von 0 bis 5 Gew.-% erwiesen. Eine detaillierte Beschreibung der einsetzbaren Antiblockmittel findet sich beispielsweise in der EP-A-0 602 964.

Die Pigmentierung der einzelnen Schichten kann danach sehr verschieden sein und richtet sich im wesentlichen nach dem Folienaufbau (Schichtaufbau) und den Anforderungen der Foile hinsichtlich Erzielung der physikalischen Eigenschaften (Trübung, Glanz) und dem Herstellungs- und Verarbeitungsverhalten.

Handelt es sich beispielsweise um die bevorzugte dreischichtige Folie mit der Basisschicht B und den beiden Deckschichten A und C, so ist in der Basisschicht B die Partikelkonzentration vorzugsweise niedriger als in den beiden Deckschichten A und C. Bei einer dreischichtigen Folie vom genannten Typ wird in der Basisschicht B die Partikelkonzentration zwischen 0 und 0,08 Gew.-%, vorzugsweise zwischen 0 und 0,06 Gew.-% und insbesondere zwischen 0 und 0,04 Gew.-% liegen. Der Partikeldurchmesser der eingestzten Teilchen ist prinzipiell nicht eingeschränkt, jedoch sind Teilchen mit einem mittleren Durchmesser von größer 0,1 µm besonders bevorzugt.

Die Polyesterfolie für das Gebinde ist in der besonders bevorzugten Ausführungsform dreischichtig aufgebaut. Die beiden Schichten A und C bilden dann die Deckschichten A und C. Aufbau, Dicke und Zusammensetzung der beiden Deckschichten A und C können unabhängig gewählt werden. In einer vorteilhaften Verwendungsform ist die Folie symmetrisch aufgebaut, das heißt, es handelt sich um eine Folie mit ABA-Auf bau. In einer anderen vorteilhaften Verwendungsform hat die zweite Deckschicht (z.B. die Deckschicht C) mehr Pigmente (d.h. höhere Pigmentkonzentration) als die erste Deckschicht A. Die Pigmentkonzentration in dieser zweiten Deckschicht liegt zwischen 0,02 und 2,0 %, vorteilhaft zwischen 0,025 und 1,5 % und insbesondere zwischen 0,03 und 1,0 %. Die andere, der Deckschicht C gegenüberliegende Schicht A kann nur wenig oder überhaupt nicht mit inerten Pigmenten gefüllt sein. Die Konzentration der inerten Partikel in der Schicht A liegt dann zwischen 0 und 0,08 Gew.-%, vorzugsweise zwischen 0 und 0,065 Gew.-% und insbesondere zwischen 0 und 0,05 Gew.-%.

Zwischen der Basisschicht und den Deckschicht(en) der Gebindefolie kann sich gegebenenfalls noch eine Zwischenschicht befinden. Diese kann wiederum aus den für die Basis- oder Deckschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere im Bereich von 1,0 bis 10 µm und ganz besonders bevorzugt im Bereich von 1,0 bis 5 µm.

Bei der besonders vorteilhaften dreischichtigen Ausführungsform der erfindungsgemäßen Folie ist die Dicke der Deckschicht(en) A (und C) im allgemeinen größer als 0,1 µm und liegt gewöhnlich im Bereich von 0,2 bis 3,0 µm, vorteilhaft im Bereich von 0,2 bis 2,5 µm, insbesondere im Bereich von 0,3 bis 2 µm und ganz besonders bevorzugt im Bereich von 0,3 bis 1,5 µm, wobei die Deckschichten A und C gleich oder verschieden dick sein können.

Die Gesamtdicke der erfindungsgemäßen Polyesterfolie kann innerhalb bestimmter Grenzen variieren. Sie beträgt 3 bis 50 µm, insbesondere 4 bis 30 µm, vorzugsweise 5 bis 20 µm, wobei die Schicht B einen Anteil von vorzugsweise etwa 5 bis 90 % an der Gesamtdicke hat.

Die Polymere für die Basisschicht B und die beiden Deckschichten A und C werden drei Extrudern zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 140° C und die Querstrekkung bei 90 bis 150°C durchgeführt. Das Längsstreckverhältnis liegt allgemein im Bereich von 2,5:1 bis 6:1. Das Querstreckverhältnis liegt allgemein im Bereich von 3,0:1 bis 5,0:1.

Bei der nachfolgenden Thermofixierung wird die Folie etwa 0,1 bis 10 s lang bei einer Temperatur von 150 bis 250°C gehalten. Anschließend wird die Folie in üblicherweise aufgewickelt.

Zur Einstellung weiterer gewünschter Eigenschaften kann die Folie auch chemisch behandelt werden. Typische Beschichtungen sind haftvermittelnde, antistatisch, schlupfverbessernd oder dehäsiv wirkende Schichten. Es bietet sich an, diese zusätzlichen Schichten über in-line Coating mittels wässriger Dispersionen vor der Querverstreckung auf die Folie aufzubringen.

Die biaxial verstreckte und thermofixierte Polyesterfolie kann vor einer Bedruckung oder vor dem Aufbringen einer metallischen Schicht auf einer oder beiden Seite(n) corona- oder flammbehandelt werden. Die Behandlungsintensität wird so gewählt, daß die Oberflächenspannung der Folie im allgemeinen über 45 mN/m liegt.

Die Folie für die Einzelverpackungen besteht in der Regel aus biaxial orientiertem Polypropylen. Die Siegelschichten der Einzelverpackungsfolien, die ein- oder beidseitig vorliegen können, bestehen vorzugsweise aus einem Ethylen-Homopolymerisat (Polyethylen hoher Dichte oder Polyethylen niedriger Dichte), einem Copolymerisat aus Propylen als Hauptkomponente und Ethylen, vorzugsweise in einer Menge von maximal 10 Gew.-% (bezogen auf das Copolymerisat), einem Copolymerisat aus Propylen als Hauptkomponente und Buten- (1), vorzugsweise in einer Menge von 10 bis 15 Gew.-% (bezogen auf das Copolymerisat), einem Terpolymerisat aus Propylen, Ethylen und einem Alphaolefin mit 4 bis 10 Kohlenstoffatomen, vorzugsweise einem solchen aus 93,2 bis 99,0 Gew.-% Propylen, 0,5 bis 1,9 Gew.-% Ethylen und 0,5 bis 4,9 Gew.-% eines Alphaolefins mit 4 bis zu 10 Kohlenstoffatomen, oder aus einer Mischung dieser Polymeren. Die Comonomeren sind in den Polymerisaten im wesentlichen statistisch verteilt (vgl. DE-B-2 814 311). Die Dicke der Siegelschichten beträgt etwa 0,1 bis 10 µm, vorzugsweise 0,4 bis 2 µm.

Es ist kennzeichnend für die vorliegende Erfindung, dass die in der beschriebenen Weise hergestellten Gebindefolien nicht siegelfähig zu den Folien für die Einzelverpackungen sind.

Ein weiterer Vorteil der erfindungsgemäßen Gebindefolien ist, dass ihre Siegelschicht(en) in einem Schritt (in line) durch Anwendung der Coextrusionstechnologie hergestellt wurde(n). Sie sind demnach wesentlich kostengünstiger als die mit Acrylat- oder PVDC "off line" beschichteten Folien.

Zusammenfassend ist festzustellen, dass sich das erfindungsgemäße Gebinde durch eine Kombination von Eigenschaften auszeichnet, welche bisher an einer Sammelpakkung nicht gemeinsam realisiert werden konnten. Die Gebindefolie zeichnet sich durch
- sehr gutes Siegelverhalten gegen sich selbst
- sehr gutes Verarbeitungsverhalten
- sehr gute Optik und eine
- sehr gute Bedruckbarkeit aus.

Die nachstehende Tabelle (Tabelle 1) faßt die wichtigsten Folieneigenschaften für die erfindungsgemäße Gebindefolie noch einmal zusammen.

**Tabelle 1**

| | erfindungsgemäßer Bereich | bevorzugt | besonders bevorzugt | Einheit | Meßmethode |
|---|---|---|---|---|---|
| Mindestsiegel-Temperatur | <130 | <125 | <120 | °C | siehe Beschreibung |
| Siegelnaht-festigkeit | >1 | >1,2 | >1,5 | N/15 mm | siehe Beschreibung |
| Glanz | >120 | >130 | >140 | | DIN 67 530 |
| Trübung | <5 | <4 | <3 | % | ASTM-D 1003-52 |
| Reibung A/C | <0,6 | <0,55 | <0,50 | | DIN 53 375 |

Zur Charakterisierung der Gebindefolie wurden die folgenden Methoden benutzt:
(1) **Reibung**
   Die Reibung wurde nach DIN 53 375 bestimmt. Die Reibung wurde 14 Tage nach der Produktion gemessen.
(2) **Trübung**
   Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4⁰-Lochblende eine 1 -⁰Spaltblende eingesetzt wurde.
(3) **Glanz**
   Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.
(4) **Bestimmung der Mindestsiegeltemperatur (Siegelanspringtemperatur)**
   Mit dem Siegelgerät HSG/ET der Firma Brugger wurden heißgesiegelte Proben (Siegelnaht 20 mm x 100 mm) hergestellt, indem eine Folie bei unterschiedlichen Temperaturen mit Hilfe zweier beheizter Siegelbalken bei einem Siegeldruck von 10 N/cm² und einer Siegeldauer von 0,5 s gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindesten 0,5 N/15 mm erreicht wird.
(5) **Siegelnahtfestigkeit**
   Zur Bestimmung wurden zwei 15 mm breite Folienstreifen übereinandergelegt und bei 130 °C, einer Siegelzeit von 0,5 s und einem Siegeldruck von 1,5 N/mm² (Gerät: Brugger Typ NDS, einseitig beheizte Siegelbacke) versiegelt. Die Siegelnahtfestigkeit wurde nach der T-Peel-Methode bestimmt.
(6) **Oberflächenspannung**
   Die Oberflächenspannung wurde mittels der sogenannten Tintenmethode (DIN 53 364) bestimmt.

### Beispiel 1

Chips aus Polyethylenterephthalat (hergestellt nach dem Umesterungsverfahren mit Mn als Umesterungskatalysator, Mn-Konzentration: 100 ppm) wurden bei 160 °C auf eine Restfeuchte von unterhalb 100 ppm getrocknet und dem Extruder für die Basisschicht B zugeführt.

Daneben wurden Chips aus einem linearen Polyester hergestellt, der aus einem amorphen Copolyester (Copo I) mit 85 mol-% Ethylenterephthalat und 15 mol-% Ethylenisophthalat besteht (hergestellt nach dem Umesterungsverfahren mit Mn als Umesterungskatalysator, Mn-Konzentration: 100 ppm). Die Pigmentierung des amorphen Copolyesters geht aus Tabelle 2 hervor. Der Copolyester wurde bei einer Temperatur von 100 °C auf eine Restfeuchte von unterhalb 100 ppm getrocknet und den jeweiligen Extrudern für die Deckschichten A und C zugeführt.

Es wurde durch Coextrusion und anschließende stufenweise Orientierung in Längs- und in Querrichtung eine transparente dreischichtige Folie mit ABA-Aufbau und einer Gesamtdicke von 12 µm hergestellt. Die Dicke der jeweiligen Schichten ist der Tabelle 2 zu entnehmen.

| Deckschichten A, Mischung aus: | |
|---|---|
| 86,0 Gew.-% | Copolyester (Copo I) mit einem SV-Wert von 800 |
| 14,0 Gew.-% | Masterbatch aus 99,0 Gew.-% Copolyester (COPO I) (SV-Wert von 800) und 0,5Gew.-% Sylobloc 44 H (KOLLOIDALES SiO₂ der Fa. Grace) und 0,5 Gew.-% Aerosil7 TT 600 (kettenartiges SiO₂ der Fa. Degussa) |

| Basisschicht B | |
|---|---|
| 100,0 Gew.-% | Polyethylenterephthalat mit einem SV-Wert von 800 |

Die Herstellungsbedingungen in den einzelnen Verfahrensschritten waren:

| | | | |
|---|---|---|---|
| Extrusion | Temperaturen | A-Schicht: | 300 °C |
| | | B-Schicht: | 300 °C |
| | | C-Schicht | 300 °C |
| | Düsenspaltweite: | | 2,5 mm |
| | Temperatur der Abzugswalze: | | 30 °C |
| Längsstreckung | Temperatur: | | 80 -120 °C |
| | Längsstreckverhältnis: | | 4,2 |
| Querstreckung | Temperatur: | | 80 - 135 °C |
| | Querstreckverhältnis: | | 4,0 |
| Fixierung | Temperatur: | | 230 °C |
| Dauer | | | 3 s |

Zur Verbesserung der Bedruckbarkeit wurde die Folie vor der Aufrollung coronabehandelt. Die Oberflächenspannung der coronabehandelten Seite betrug 50 mN/m.

Die Gebindefolie zeichnet sich durch sehr gute Siegeleigenschaften gegen sich selbst, sehr gute optische Eigenschaften und durch ein gutes Verarbeitungsverhalten aus (vgl. Tabelle 2).

### Beispiel 2

Es wurde eine Folie nach Beispiel 1 hergestellt. Im Unterschied zu Beispiel 1 sind jetzt die Siegelschichtdicken von 1 auf 1,5 µm angehoben worden. Die Folie zeichnet sich durch eine bessere Siegelbarkeit gegen sich selbst aus.

### Beispiel 3

Es wurde eine Folie nach Beispiel 2 hergestellt. Im Unterschied zu Beispiel 2 sind jetzt die Pigmentkonzentrationen verringert worden. Die Folie zeichnet sich durch eine bessere Siegelbarkeit gegen sich selbst aus.

### Beispiel 4

Es wurde edine Folie nach Beispiel 3 hergestellt. Im Unterschied zu Beispiel 3 ist jetzt die Konzentration des amorphen Copolyesters für die Deckschichten geändert worden. Der amorphe Copolyester besteht zu 80 mol-% aus Ethylenterephthalat und zu 20 mol-% aus Ethylenisophthalat (Copo II). Die Folie zeichnet sich durch eine bessere Siegelbarkeit gegen sich selbst aus.

### Beispiel 5

Es wurde eine Folie nach Beispiel 1 hergestellt. Im Unterschied zu Beispiel 1 sind jetzt die Polymere für die Deckschichten A und C geändert worden. Die Folie zeichnet sich durch eine gute Siegelbarkeit und durch sehr gute optische Eigenschaften aus.

Es wurden Chips aus Polyethylenterephthalat und Polyethylen-2,6-naphthalat (im Gewichtsverhältnis von 1/1) (Copo III) bei 160 °C auf eine Restfeuchte von 50 ppm getrocknet und den beiden Extrudern für die Deckschichten A und C zugeführt. Die Bedingungen im Extruder für die Deckschichten A und C sind wie in Beispiel 1 angegeben. Die Verfahrensbedingungen waren wie in Beispiel 1.

| B-Basisschicht: | |
|---|---|
| 95 Gew.-% | Polyethylenterephthalat RT 49 der Firma Hoechst AG mit einem SV-Wert von 800 |
| 5 Gew.-% | Masterbatch aus 99 Gew.-% Polyethylenterephthalat und 1,0 Gew.-% Sylobloc 44 H, das eine mittlere Teilchengröße von 4,5 µm hat |

| A und C-Deckschichten | |
|---|---|
| 50 Gew.-% | Polyethylen-2,6-naphthalat Polyclear N 100 Prepolymer der Firma Hoechst AG mit einem SV-Wert von 1000 |
| 40 Gew.-% | Polyethylenterephthalat RT 49 der Firma Hoechst AG mit einem SV-Wert von 800 |
| 10 Gew.-% | Masterbatch aus 99,0 Gew.-% Polyethylenterephthalat und 1,0 Gew.-% Sylobloc 44 H, das eine mittlere Teilchengröße von 1,0 µm hat |

### Vergleichsbeispiel 1

Dieses Vergleichsbeispiel entspricht Beispiel 1 der DE 3 635 928. Die Siegeleigenschaften lassen zu wünschen übrig.

**Tabelle 2**

| | Foliendicke µm | Folienaufbau | Schichtdicken µm | Pigmentkonzentration ppm | Siegelanspringtemperatur °C | Siegelnahtfestigkeit N/15 mm | Glanz | Trübung % | Verarbeitungsverhalten |
|---|---|---|---|---|---|---|---|---|---|
| B 1 | 12 | ABA | 1/10/1 | 1400/0/1400 | 120 | 1,5 | 140 | 2,8 | sehr gut |
| B 2 | 12 | ABA | 1,5/9/1,5 | 1400/0/1400 | 110 | 1,8 | 135 | 2,9 | sehr gut |
| B 3 | 12 | ABA | 1,5/9/1,5 | 700/0/700 | 105 | 2,0 | 140 | 2,5 | gut |
| B 4 | 12 | ABA | 1,5/9/1,5 | 700/0/700 | 100 | 2,3 | 136 | 2,7 | gut |
| B 5 | 12 | ABA | 1/10/1 | 10001011000 | 115 | 1,3 | 180 | 1,9 | gut |
| VB 1 | 12 | A | 25 | | 130 | 0,4 | 125 | 2,0 | befriedigend |

## Patentansprüche

1. Sammelpacksystem, bestehend aus einer Anordnung von Einzelverpackungen, welche in einer Gebindefolie verpackt sind, bei dem die Einzelverpackungen in Polypropylenfolien verpackt sind, **dadurch gekennzeichnet, dass** die Gebindefolie aus einer siegelbaren, biaxial streckorientierten, durch Coextrusion hergestellten, mehrschichtigen Polyesterfolie mit einer Basisschicht B und mindestens einer Deckschicht A besteht, wobei die Deckschicht auf Basis von Copolyestern aufgebaut ist.

2. Sammelpacksystem nach Anspruch 1, **dadurch gekennzeichnet, dass** die Gebindefolie eine weitere Deckschicht (C) enthält, die sich auf der, der Deckschicht (A) entgegengesetzten Seite der Basisschicht (B) befindet.

3. Sammelpacksystem nach Anspruch 1 oder 2, **dadurch gekennzeichnet, dass** die Basisschicht B der Gebindefolie im wesentlichen aus einem Polyethylenterephthalat Homopolymeren besteht.

4. Sammelpacksystem nach den Ansprüchen 1, 2 oder 3, **dadurch gekennzeichnet, dass** die siegelfähige(n) Deckschicht(en) der Gebindefolie aus Copolymeren besteht(en), die Ethylen-2,6-naphthalat-Einheiten und Ethylen-terephthalat-Einheiten enthält(enthalten).

5. Sammelpacksystem nach den Ansprüchen 1, 2 oder 3, **dadurch gekennzeichnet, dass** die siegelfähige(n) Deckschicht(en) der Gebindefolie aus Copolymeren besteht(en), die Ethylen-isophthalat- und Ethylen-terephthalat-Einheiten enthält (enthalten).

6. Sammelpacksystem nach einem der Ansprüche 1 bis 5, **dadurch gekennzeichnet, dass** die Gesamtdicke der Gebindefolie 5 bis 50 µm, insbesondere 6 bis 30 µm, beträgt.

## Claims

1. A multiple-pack system composed of an arrangement of individual packages which have been packed in a combined-pack film, where the individual packages in the multiple-pack system have been packed in polypropylene films, wherein the combined-pack film is composed of a sealable, biaxially stretch-oriented coextruded polyester film having more than one layer with a base layer B and with at least one outer layer A, where the structure of the outer layer has been based on copolyesters.

2. The multiple-pack system as claimed in claim 1, wherein the combined-pack film comprises another outer layer (C) situated on that side of the base layer (B) which is opposite the outer layer (A).

3. The multiple-pack system as claimed in claim 1 or 2, wherein the base layer (B) of the combined-pack film essentially consists of a polyethylene terephthalate homopolymer.

4. The multiple-pack system as claimed in any of claims 1, 2 or 3, wherein the sealable outer layer(s) of the combined-pack film are composed of copolymers which comprise ethylene 2,6-naphthalate units and ethylene terephthalate units.

5. The multiple-pack system as claimed in any of claims 1, 2 or 3, wherein the sealable outer layer(s) of the combined-pack film are composed of copolymers which comprise ethylene isophthalate units and ethylene terephthalate units.

6. The multiple-pack system as claimed in any one of claims 1 to 5, wherein the total thickness of the combined-pack film is from 5 to 50 µm, in particular from 6 to 30 µm.

## Revendications

1. Système d'emballage multiple, constitué d'un agencement d'emballages individuels, lesquels sont emballés dans une feuille d'empaquetage, dans lequel les emballages individuels sont emballés dans des feuilles en polypropylène, **caractérisé en ce que** la feuille d'empaquetage est constituée d'une feuille en polyester scellable à plusieurs couches, fabriquée par co-extrusion, à extension orientée dans le sens biaxial, comprenant une couche de base B et au moins une couche de revêtement A, la structure de la couche de revêtement étant à base de copolyesters.

2. Système d'emballage multiple selon la revendication 1, **caractérisé en ce que** la feuille d'empaquetage contient une autre couche de revêtement (C), qui se situe sur le côté de la couche de base (B) opposé à la couche de revêtement (A).

3. Système d'emballage multiple selon la revendication 1 ou 2, **caractérisé en ce que** la couche de base B de la feuille d'empaquetage est constituée sensiblement d'un homopolymère polyéthylènetéréphtalate.

4. Système d'emballage multiple selon les revendications 1, 2 ou 3, **caractérisé en ce que** la(les) couche(s) de revêtement scellable(s) de la feuille d'empaquetage est(sont) constituée(s) de copolymères, qui contiennent des unités d'éthylène-2,6-naphtalate et des unités d'éthylène téréphtalate.

5. Système d'emballage multiple selon les revendications 1, 2 ou 3, **caractérisé en ce que** la(les) couche(s) de revêtement scellable(s) de la feuille d'empaquetage est(sont) constituée(s) de copolymères qui contiennent des unités d'éthylène isophtalate et d'éthylène téréphtalate.

6. Système d'emballage multiple selon l'une quelconque des revendications 1 à 5, **caractérisé en ce que** l'épaisseur totale de la feuille d'empaquetage mesure de 5 à 50 µm, notamment de 6 à 30 µm.
